# FASCICULE DE BREVET EUROPEEN

(11) **EP 1 493 941 B1**
(45) Date de publication et mention de la délivrance du brevet: **09.08.2006**
(21) Numéro de dépôt: 04291533.0
(22) Date de dépôt: 17.06.2004
(51) Int. Cl.: F16F 15/00, F16F 7/10, B60K 5/12

(54) **Dispositif anti-vibratoire**
Schwingungsdämpfungseinrichtung
Antivibration device

(30) Priorité: 02.07.2003 FR 0308058
(43) Date de publication de la demande: 05.01.2005
(73) Titulaire: Peugeot Citroen Automobiles S.A., 78140 Vélizy Villacoublay (FR)
(72) Inventeur: Jacquet, Bernard, 78350 Jouy en Josas (FR); Henriot, Philippe, 75017 Paris (FR); Dusi, Jacques, 94880 Noiseau (FR)
(74) Mandataire: Lagrange, Jacques Etienne M.M.

(56) Documents cités:
- EP-A- 0 999 379
- DE-A- 4 116 270
- DE-A- 4 413 447
- DE-A- 19 638 695
- DE-A- 19 718 678
- US-A- 5 213 184
- PATENT ABSTRACTS OF JAPAN vol. 2000, no. 07, 29 septembre 2000 (2000-09-29) & JP 2000 120764 A (MITSUBISHI HEAVY IND LTD), 25 avril 2000 (2000-04-25)

## Description

La présente invention concerne un dispositif anti-vibratoire générant une contre vibration destinée à atténuer les vibrations transmises à une structure par une source de vibrations. La structure est en particulier la caisse d'un véhicule automobile et la source de vibrations est le moteur de ce véhicule, notamment lorsqu'il tourne au ralenti.

Le moteur d'un véhicule automobile engendre des vibrations qui se transmettent à la caisse du véhicule et peuvent incommoder les passagers. Afin de limiter la transmission des vibrations, on dispose sur toutes les voies de transmission des vibrations du moteur vers la caisse des cales en caoutchouc dont la raideur est adaptée pour filtrer les vibrations. Le nombre de cales nécessaires est important car les voies de transmission des vibrations du moteur vers la caisse du véhicule sont très nombreuses. Ce sont, en particulier les liaisons du moteur avec son berceau, les zones de liaisons du berceau avec la caisse du véhicule et les points de fixation des amortisseurs de la suspension du véhicule. Mais le filtrage des vibrations transmises à la caisse du véhicule est imparfait car les caractéristiques des cales doivent être choisies pour amortir au mieux les vibrations sur l'ensemble de la gamme de fréquence que l'on est susceptible de rencontrer. Or, s'il est possible de trouver un ensemble de cales qui amortissent de façon satisfaisante les vibrations lorsque le moteur tourne à un régime relativement élevé, le choix des cales est mal adapté aux vibrations engendrées par le moteur tournant à bas régime en particulier lorsque le moteur tourne au ralenti.

Afin d'améliorer l'isolation vibratoire de la caisse du véhicule et du moteur aussi bien à haut régime qu'à bas régime, il a été proposé d'utiliser soit des cales hydrauliques, soit des cales multi-états dont les propriétés sont fonction de la fréquence de la vibration considérée. Mais cette solution est à la fois complexe et très coûteuse. Elle est très coûteuse notamment parce qu'il est nécessaire de disposer une cale hydraulique ou une cale multi-état par voie de passage. Or il y a environ dix voies de passage voire plus pour un train pseudo Mc Pherson en particulier, et le coût d'une cale hydraulique ou d'une cale multi-états est en général trois à quatre fois supérieure au coût d'une cale en caoutchouc classique.

Il a également été proposé d'utiliser des cales actives pilotées. Ces cales sont des dispositifs qui engendrent eux-mêmes des vibrations, et qui sont disposés sur des voies de transmission à la place des cales en caoutchouc. Mais ces dispositifs sont encore plus coûteux que les dispositifs précédents. Aussi, on utilise en général un nombre limité de cales actives disposées sur seulement une partie des voies de transmission, mais cela limite leur efficacité.

On a également proposé d'utiliser des dispositifs anti-vibratoires actifs comportant un moyen de génération d'une contre-vibration disposé contre la caisse du véhicule. Ces dispositifs anti-vibratoires engendrent des vibrations de même fréquence (ou de même pulsation, ce qui est équivalent puisque ces grandeurs sont égales à un facteur 2n près) mais en opposition de phase avec les vibrations générées par le bloc moteur. Ces vibrations viennent se superposer aux vibrations engendrées par le moteur, de sorte que la vibration résultante dans la caisse du véhicule est la somme de la vibration engendrée par le moteur et de la contre vibration engendrée par le dispositif anti-vibratoire. Comme ces deux vibrations sont en opposition de phase, la vibration résultante est sensiblement atténuée. Ces dispositifs utilisent des générateurs de contre vibrations qui sont par exemple des batteurs électromécaniques et qui présentent l'inconvénient d'être très volumineux et très lourds, notamment lorsqu'ils sont destinés à engendrer des contre vibrations de forte puissance, ce qui est nécessaire pour amortir les vibrations générées par un bloc moteur. En outre, ces dispositifs de batteurs électromécaniques nécessitent des sources d'énergie importantes.

Il a également été proposé d'utiliser des générateurs de contre-vibrations constitués de quatre rotors comportant des balourds (voir US-A-5213184) . Chaque rotor étant entraîné par un moteur dont on peut piloter le sens de rotation, la vitesse de rotation et la position angulaire. De tels dispositifs ont l'avantage de permettre de générer des efforts dont l'orientation, la fréquence, la phase et l'amplitude peuvent être ajustées à volonté, au moins dans une certaine gamme. Mais ces dispositifs présentent l'inconvénient de nécessiter un pilotage extrêmement complexe, et l'utilisation de masses importantes pour générer des contre vibrations suffisamment puissantes pour amortir les vibrations générées par le moteur d'un véhicule automobile au ralenti.

On connaît également par le document EP-A-0 999 379 un moyen d'amortissement des vibrations utilisant un actionneur piézo-électrique et un moyen de pilotage.

Le but de la présente invention est de remédier à ces inconvénients en proposant un dispositif anti-vibratoire destiné à atténuer les vibrations efforts importants sur la structure sur laquelle il est disposé.

A cet effet, l'invention a pour objet un dispositif antivibratoire du type comprenant un moyen de génération d'une contre vibration et un moyen de pilotage comprenant, en outre, un moyen de couplage coopérant avec le moyen de génération d'une contre vibration pour amplifier la contre-vibration engendrée par le moyen de génération d'une contre vibration.

Le moyen de couplage est par exemple une cale viscoélastique dont la rigidité est telle que la fréquence de résonance du dispositif antivibratoire est inférieure à la fréquence de la contre vibration.

De préférence la fréquence de résonance du dispositif antivibratoire est voisine de la fréquence de contre vibration.

La cale viscoélastique peut être une cale dont la rigidité est réglable et par exemple, une cale hydraulique à fluide magnétorhéologique.

De préférence, le moyen de génération d'une contribution est constitué de deux rotors munis de balourds, couplés mécaniquement de façon à tourner en sens inverse l'un de l'autre à la même vitesse, et d'un moteur d'entraînement.

Le moyen de génération d'une contre vibration peut comporter en outre un batteur de faible puissance.

Le moyen de pilotage peut comprendre un moyen de détection de la fréquence et de la phase d'une source de vibrations, un moyen de détection de la phase de la contre vibration générée par le moyen de génération d'une contre vibration et un filtre pour générer un signal de commande du moyen de génération d'une contre vibration. De préférence, le filtre est de type à cartographie.

Le moyen de pilotage peut également être constitué d'un dispositif de détection de la fréquence d'une source de vibration, un moyen de détection de l'amplitude d'une vibration et un filtre pour générer un signal de commande du moyen de génération d'une contre vibration. De préférence, le filtre utilise alors une loi de commande du type moindre carrés.

En outre, le moyen de pilotage peut générer un signal de commande de la rigidité de la cale viscoélastique.

Lorsque le dispositif comporte un batteur de faible puissance, le moyen de pilotage génère un signal de commande du batteur de faible puissance. De préférence, le signal de commande du batteur de faible puissance est un signal périodique à large bande.

L'invention concerne également un Véhicule automobile qui comporte au moins un dispositif selon l'invention destiné à atténuer les vibrations transmises à la caisse par le groupe moto propulseur (GMP).

De préférence, la contre vibration émise par le dispositif anti-vibratoire a une fréquence égale à une harmonique de la vibration engendrée par le groupe moto propulseur lorsqu'il tourne au ralenti. Lorsque le groupe moto propulseur est du type 4 cylindres 4 temps, la fréquence de la contre-vibration est de préférence égale à la deuxième harmonique de la vibration engendrée par le groupe moto propulseur lorsqu'il tourne au ralenti.

L'invention va maintenant être décrite plus en détail mais de façon non limitative en regard des figures annexées, dans lesquelles :
- la figure 1 représente de façon schématique une structure sur laquelle est disposée une source de vibrations et un dispositif anti-vibratoire comprenant un générateur de contre vibrations, un moyen d'amplification constitué d'une cale viscoélastique, et un dispositif de pilotage fonctionnant en boucle ouverte.
- la figure 2 est une courbe représentant le facteur d'amplification de la contre vibration transmise par le moyen de couplage en fonction de la pulsation de la vibration transmise.
- la figure 3 représente une structure portant une source de vibrations et un dispositif anti-vibratoire du type de celui de la figure 1 comprenant un moyen de pilotage fonctionnant en boucle fermée.
- la figure 4 représente une structure portant une source de vibrations et un dispositif anti-vibratoire comprenant un moyen de génération d'une contre vibration, un moyen de couplage constitué d'une cale viscoélastique à rigidité variable, et un moyen de pilotage en boucle fermée.
- la figure 5 représente de façon schématique une structure portant une source de vibrations, un dispositif anti-vibratoire comprenant un moyen de génération d'une contre vibration constituée de deux rotors, un moyen de couplage, et un moyen de génération d'une contre vibration complémentaire constituée d'un batteur, et un moyen de pilotage en boucle fermée.
- la figure 6 représente de façon schématique une structure sur laquelle est disposée une source de vibrations, un dispositif anti-vibratoire constitué d'un moyen de génération d'une contre vibration constituée de deux rotors, d'un dispositif de couplage et d'un moyen de génération d'une contre vibration complémentaire constitué d'un batteur, et d'un moyen de pilotage en boucle ouverte.

Dans ces figures, par soucis de clarté, on a repéré par les mêmes repères, les éléments identiques.

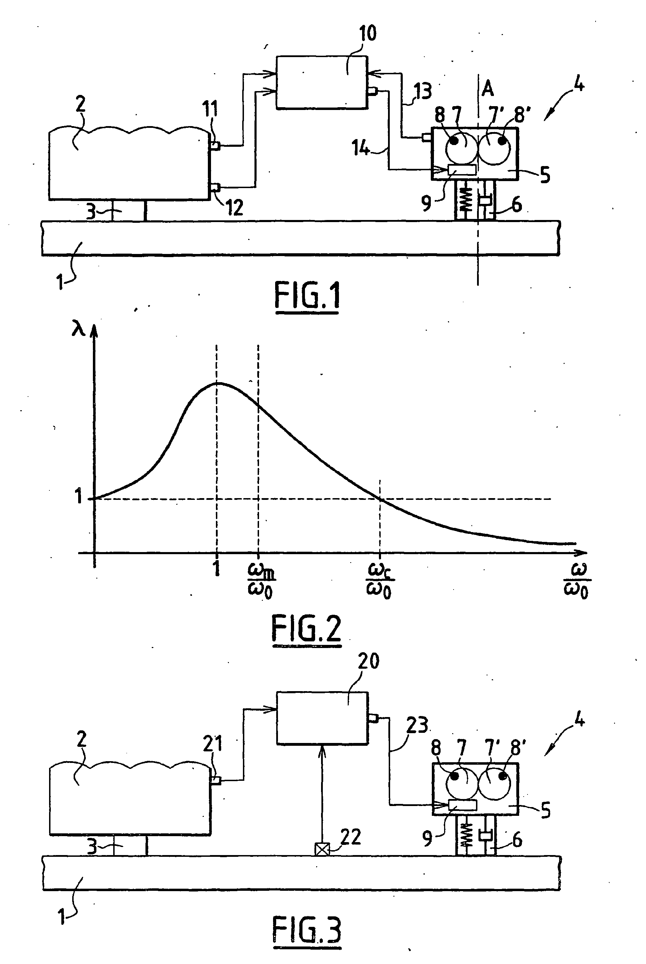

A la figure 1, on a représenté de façon schématique, une structure 1 qui est par exemple la caisse d'un véhicule automobile sur lequel est disposé une source de vibrations 2 qui est par exemple le bloc moteur du véhicule automobile, ce bloc moteur étant lié à la structure 1 par l'intermédiaire d'une cale 3 qui représente l'ensemble des voies de transmission des vibrations transmises par la source de vibrations 2 à la structure 1. Sur la structure 1 est disposé un dispositif anti-vibratoire repéré généralement par 4 comprenant un moyen de génération d'une contre vibration 5, d'un moyen de couplage 6 disposé entre le moyen de génération d'une contre vibration 5 et la structure 1, et un moyen de pilotage 10.

Le moyen de génération d'une contre vibration 5 est constitué de deux rotors 7 et 7' portant chacun un balourd 8 et 8', couplés mécaniquement et entraînés par un moteur 9. Le moyen de couplage mécanique des rotors 7 et 7' est par exemple un moyen de couplage par engrenage qui est tel que les deux rotors 7 et 7' tournent en sens inverse à la même vitesse. Le moyen d'entraînement 9, est par exemple un moteur électrique monté sur l'axe de rotation de l'un des rotors. Les deux rotors 7 et 7', sont montés symétriques par rapport à un axe A de telle sorte que les deux balourds 8 et 8' soient à tout instant symétriques par rapport à cet axe. De préférence l'axe A est perpendiculaire à la structure 1.

Le moyen de couplage 6, disposé entre la structure 1 et le moyen de génération d'une contre vibration 5, est constitué d'une cale viscoélastique, par exemple en caoutchouc. L'ensemble constitué par le moyen de génération d'une contre vibration 5 et le moyen de couplage 6, constitue un oscillateur dont la pulsation de résonance ω₀ dépend d'une part de la masse du moyen de génération de contre vibrations 5 et d'autre part de la rigidité du moyen de couplage 6. La rigidité du moyen de couplage 6 est choisie de telle sorte que la pulsation de résonance de l'oscillateur constitué par le moyen de génération d'une contre vibration 5 et du moyen de couplage 6 soit inférieur, et de préférence légèrement inférieur, à la pulsation d'une des harmoniques de la vibration engendré par la source de vibration 2 qu'on souhaite atténuer. Dans ces conditions, lorsque le moyen de génération de contre vibration 5, génère une contre vibration de pulsation ωₘ, égale à la pulsation de l'harmonique de la vibration engendrée par la source de vibration 2 que l'on souhaite atténuer, le rapport de l'effort qui est alors transmis à la structure 1, à l'effort qui aurait été transmis à la structure 1 en l'absence de dispositif de couplage 6, est très supérieur à un comme le montre la figure 2. Sur cette figure, qui représente la courbe de l'amplitude de la vibration d'un oscillateur viscoélastique en fonction de l'amplitude de la vibration d'excitation, on voit que, lorsque la pulsation de la vibration d'excitation est égale à zéro, l'amplitude de la vibration de l'oscillateur est égale à l'amplitude de la vibration de l'oscillation, lorsque la pulsation de la vibration d'excitation est égale à la pulsation de résonance ω₀ de l'oscillateur, l'amplitude de l'oscillation de l'oscillateur est maximale, enfin lorsque la pulsation de la vibration d'excitation de l'oscillateur augmente au-delà de la pulsation de résonance l'amplitude de la vibration de l'oscillateur décroît et tend vers zéro lorsque la pulsation tend vers l'infini. Sur cette figure, on voit que lorsque la pulsation ω est supérieure à une pulsation critique ω_{c}, l'amplitude de la vibration transmise par l'oscillateur est inférieure à un, ce qui correspond au mode de fonctionnement habituel des cales viscoélastiques destinées à amortir les vibrations. Lorsque la pulsation ω, est inférieure à la pulsation critique ω_{c}, la vibration transmise par l'oscillateur est supérieure à la vibration d'excitation. On voit ainsi que, lorsque la pulsation ωₘ de la vibration que l'on souhaite amortir en générant une contre vibration de pulsation ωₘ est inférieure à la pulsation critique ω_{c}, le moyen de couplage 6 remplie une fonction d'amplification de la vibration générée par le moyen de génération d'une contre vibration 5. Cette contre vibration est d'autant plus importante que la pulsation ωₘ de la vibration que l'on veut atténuer est proche de la pulsation ω₀ de résonance du dispositif.

Le moyen de pilotage 10 est un filtre qui reçoit depuis un capteur 11 disposé sur la source de vibrations 2 un signal représentatif de la fréquence de la source de la vibration 2, et depuis un capteur 12 situé également sur la source de vibrations 2 un signal représentatif de la phase de la vibration engendrée par la source de vibration 2. Le filtre du dispositif de pilotage 10 reçoit également depuis un capteur 13 disposé sur le moyen de génération d'une contre vibration, un signal donnant la position des deux rotors 7 et 7' à tout instant. C'est à dire la phase de la contre vibration engendrée par le dispositif de génération d'une contre vibration. A partir de ces différents signaux, et à l'aide d'une méthode de type cartographie connue en elle-même, le filtre du dispositif de commande 10 génère un signal 14 de commande du moteur 9 du dispositif de génération de contre vibration. Ce signal de commande est un signal qui commande d'une part la vitesse de rotation du moteur, et d'autre part l'instant de mise en route du moteur de telle sorte que la contre vibration engendrée par le moyen 5 ait la même fréquence que la vibration émise par la source de vibration 2 et soit en opposition de phase avec celle-ci. Lorsque la structure 1 est la caisse d'un véhicule automobile, et lorsque la source de vibrations 2 est le groupe moto propulseur du véhicule automobile, la pulsation de résonance ω₀ du dispositif anti-vibratoire est choisie de façon à être légèrement inférieur à la pulsation ωₘ d'une harmonique de la vibration engendrée par le groupe moto propulseur du véhicule automobile lorsqu'il tourne au ralenti. Cette harmonique est choisi en fonction du type de moteur. Par exemple, pour un moteur 5 cylindres 4 temps on choisit de préférence la deuxième harmonique, pour un moteur à 6 cylindres, on choisit la troisième harmonique et pour un moteur bi-cylindres, la première harmonique. Dans le cas d'un moteur 4 cylindres 4 temps, la fréquence de la deuxième harmonique est en général voisine de 27 Hertz. Lorsque le groupe moteur du véhicule automobile tourne au ralenti, le dispositif de commande 10 du dispositif anti-vibratoire 4, envoie au moteur 9 un signal de commande 4 pour que le moteur 9 tourne à une vitesse adaptée pour que la pulsation de la contre vibration engendrée par le moyen de génération d'une contre vibration 5 soit égale à la pulsation ωₘ de la deuxième harmonique de la vibration engendrée par le groupe moteur du véhicule automobile. Le moyen de commande 10, envoie également un signal de telle sorte que la contre vibration générée par le moyen de génération de contre vibrations 5 soit en opposition de phase avec la vibration générée par le moteur 2. Dans ces conditions et comme la pulsation ωₘ de la contre vibration est voisine de la pulsation de résonance ω₀ du dispositif anti-vibratoire, l'amplification de la vibration générée par le moyen de génération d'une contre vibration 5 est maximal. Du fait de cette amplification, qui peut être d'un facteur supérieur à 3, il est possible d'atténuer la vibration engendrée dans la structure 1 par le groupe moteur 2, à l'aide d'un moyen de génération de contre vibrations 5 dont les balourds 8 et 8' sont relativement légers; leur poids est de l'ordre de quelques grammes.

Lorsque le régime du groupe moteur augmente la pulsation de la vibration engendrée par le groupe moteur augmente. Lorsque cette pulsation dépasse une certaine valeur, le filtre 10 génère une commande pour le moteur 9 qui conduit à faire tourner le moteur 9 à une vitesse plus élevée de façon à engendrer une contre vibration dont la pulsation ω' est supérieure à la pulsation ωₘ correspondant au régime de ralenti du moteur. Comme on le voit sur la figure 2 la pulsation ω' étant supérieure à la pulsation ωₘ, le facteur d'amplification de la contre vibration est diminué. Cependant, l'amplitude de la contre vibration engendrée par la rotation des rotors étant proportionnelle au carré de la pulsation ω, et le facteur d'amplification décroissant selon une loi proche de 1/ω², l'amplitude de la contre vibration transmise à la structure 1 reste à peu près constante.

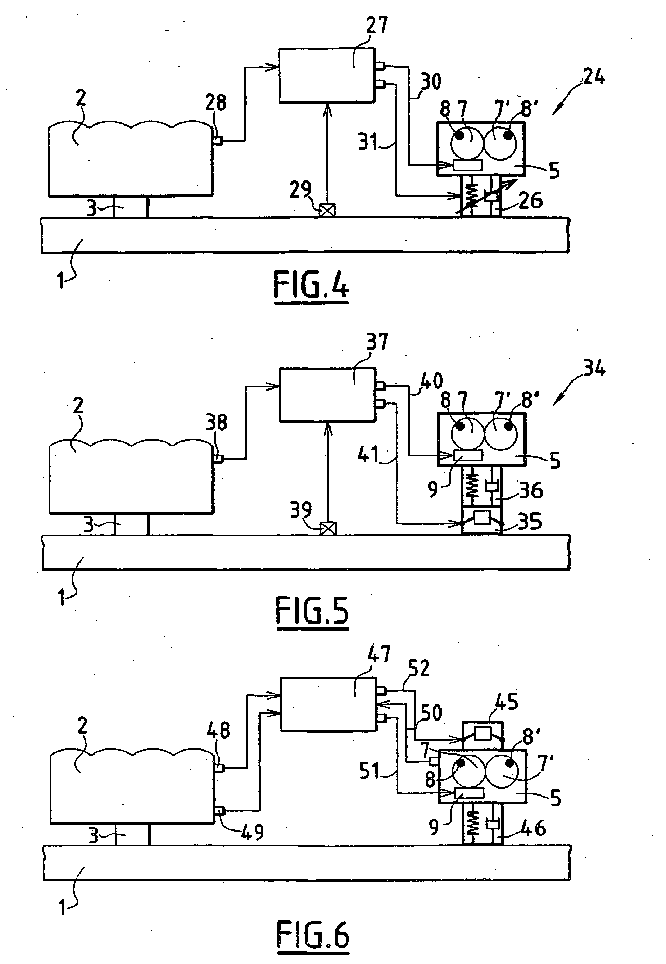

Dans une variante représentée à la figure 3, la vibration transmise à la structure 1 par la source de vibrations 2 par l'intermédiaire de la cale 3, est atténuée à l'aide d'un dispositif anti-vibratoire repéré généralement par 4 comportant un moyen de génération d'une contre vibration 5 constitué de rotors avec balourds tournant en sens inverse, un moyen de couplage viscoélastique 6 remplissant une fonction d'amplification, et un moyen de pilotage 20 qui fonctionne en boucle fermée. Le moyen de pilotage 20 qui est également un filtre, reçoit depuis un capteur 21 situé la source de vibrations 2 un signal de fréquence et depuis un capteur 22 situé sur la structure 1 un signal d'amplitude de la vibration de la structure 1. A l'aide de ces deux signaux d'entrée, le filtre élabore une consigne de commande 23 envoyée au moteur 9. Le signal de commande envoyé au moteur 9 est un signal de vitesse de rotation. Le signal de vitesse de rotation est élaboré par le filtre à l'aide d'une loi de commande de type moindre carrés utilisant un algorithme auto-adaptatif dit algorithme du gradient. De telles lois de commande ou de tels algorithmes sont connus en eux-même.

Dans un troisième mode de réalisation représenté à la figure 4, le dispositif anti-vibratoire repéré généralement par 24 destiné à atténuer la vibration transmise à une structure 1 par une source de vibrations 2 par l'intermédiaire d'une cale 3, est constitué d'une part d'un moyen de génération d'une contre vibration 5 constitué de deux rotors 7 et 7' munis de balourds 8 et 8' liés mécaniquement et entraînés par un moteur 9 identique au moyen de génération d'une contre vibration décrit précédemment, d'un moyen de couplage 26 disposé entre le moyen de génération d'une contre vibration 5 et la structure 1, et d'un moyen de commande 27. Le moyen de couplage 26 est une cale viscoélastique à raideur variable constituée par exemple d'une cale hydrodynamique à fluide magnétorhéologique connue en elle-même. De telles cales à raideur variable sont des cales dans lesquelles on peut piloter la raideur en envoyant un signal électrique. Le dispositif de commande 27 tel qu'il est représenté, est un dispositif de commande en boucle fermée qui reçoit depuis un capteur 28 situé sur la source de vibrations 2 un signal de fréquence et depuis un capteur 29 disposé sur la structure 1 un signal d'amplitude de la vibration de la structure 1. Le dispositif de commande 27 qui comporte un filtre mettant en oeuvre une loi de commande de type moindre carrés, élabore d'une part un signal 30 de commande du moteur 9 du moyen de génération de contre vibrations 5, et d'autre part un signal de commande 31 de rigidité envoyé à la cale à rigidité variable 26. On notera que le dispositif de commande 27 est un dispositif de commande en boucle fermée, mais que ce dispositif pourrait être tout aussi bien être un dispositif de commande en boucle ouverte tel qu'on l'a décrit précédemment. Il comporterait alors un capteur de phase situé sur la source de vibrations 2 et un capteur de phase situé sur le moyen de génération d'une contre vibration 5 et ne comporterait pas de capteur d'amplitude de vibration disposé sur la structure 1.

Un tel dispositif présente l'avantage de permettre d'adopter capter la raideur de la cale à raideur variable 26 en fonction de la pulsation de la vibration que l'on veut atténuer, et ainsi de faire varier la pulsation de résonance de l'oscillateur constitué par le moyen de génération d'une contre vibration 5 et la cale à raideur variable 26, en fonction de la pulsation *ω* de la fréquence de la contre vibration que l'on doit générer. De ce fait, il est possible de piloter simultanément à la fois la pulsation de la contre vibration qui est générée par le dispositif anti-vibratoire et l'amplitude de contre vibration.

Dans un quatrième mode de réalisation représenté à la figure 5, le dispositif anti-vibratoire repéré généralement par 34 est destiné à atténuer les vibrations d'une structure 1 engendrées par une source de vibrations 2 et transmise par l'intermédiaire d'une cale 3, est constitué d'un moyen de génération d'une contre vibration 5 comportant deux rotors munis de balourds tournant en sens inverse, d'un moyen de couplage 36 constitué d'une cale viscoélastique, et, en outre, d'un batteur dynamique de faible puissance 35. Le dispositif comporte également un moyen de pilotage 37, représenté sous la forme d'un moyen de pilotage en boucle fermée.

Le vibreur dynamique de faible puissance 35, qui est par exemple un vibreur électromécanique de type connu comportant une masse mis en mouvement par un solénoïde, permet de superposer à la contre vibration générée par le moyen de génération de contre vibration 5 à balourds, une contre vibration supplémentaire afin d'ajuster l'amplitude de la contre vibration. Ce batteur dynamique a l'avantage également de pouvoir recevoir un signal de commande à large bande, c'est à dire un signal dont le spectre de fréquence comporte un ensemble d'harmoniques. Ainsi, il est possible de superposer à la contre vibration engendrée par le moyen de génération de la contre vibration 34, un signal large bande afin d'atténuer non seulement une harmonique principale à la vibration générée par la source de vibrations 2 mais également des harmoniques complémentaires.

Dans ce mode de réalisation, le batteur dynamique de faible puissance 35 est disposé directement contre la structure 1 et le moyen de couplage 36 est disposé entre le batteur dynamique de faible puissance 35 et le moyen de génération d'une contre vibration 34.

Le mode de pilotage 37 reçoit un signal de fréquence en provenance d'un capteur 38 disposé sur la source de vibration 2 et un signal d'amplitude de vibrations issu d'un capteur 39 disposé sur la structure 1, et il permet d'une part une consigne 40 de vitesse pour le moteur 9 du moyen de génération d'une contre vibration, et d'autre part une consigne 41 pour le batteur dynamique de faible puissance 35. Cette consigne est un signal périodique éventuellement à large bande dont l'amplitude et la phase sont ajustées en fonction des signaux reçus par le moyen de pilotage. Le moyen de pilotage 37 pourrait tout aussi bien être un moyen de pilotage en boucle ouverte tel qu'on l'a décrit précédemment, émettant une consigne de commande pour le moteur 9 et une consigne 41 de commande du vibreur dynamique de faible puissance 35.

A la figure 6, on a représenté une variante du mode de réalisation précédent. Dans cette variante, le dispositif anti-vibratoire destiné à amortir les vibrations d'une structure 1 transmise par une source de vibrations 2 par l'intermédiaire d'une cale 3, comporte un moyen de génération de contre vibrations 5 à deux rotors 7 et 7' munis de deux balourds 8 et 8' entraînés par un moteur 9, un moyen de couplage 46 constitué d'une cale viscoélastique disposée entre le moyen de génération de contre vibrations 5 et la structure 1, et un batteur dynamique de faible puissance 45 disposé sur le moyen de génération de contre vibrations 5. Le moyen de pilotage 47, est un moyen de pilotage en boucle ouverte qui reçoit depuis un capteur de vibrations 48 disposé sur la source de vibration 2, un signal de fréquence, depuis un capteur 49 disposé sur la source de vibrations 2 un signal de phase de la vibration émise par la source de vibrations 2, et un signal 50 en provenance du moyen de génération de contre vibrations 5. Le moyen de pilotage 47 émet d'une part un signal de commande 51 pour le moteur 9 du dispositif de génération de vibrations 5 et d'autre part un signal 52 de commande du batteur dynamique de faible puissance 45. Le dispositif de commande 47 comporte un filtre du type filtre à cartographie. Bien que le dispositif de commande 47 qui vient d'être décrit est un dispositif de commande du type à boucle ouverte, ce dispositif pourrait tout aussi bien être un dispositif de commande en boucle fermée tel qu'il a été décrit ci-dessus. Ce mode de réalisation ne diffère du mode de réalisation précédent que par la disposition relative de moyen de génération d'une contre vibration 5, du moyen de couplage 46 et du batteur dynamique de faible puissance 45. Mais il se comporte exactement de la même façon que le mode de réalisation précédent. Il apporte donc les mêmes effets.

Dans le mode de réalisation et sa variante, qui viennent d'être décrits, le moyen de couplage 36 ou 46 est constitué d'une cale viscoélastique passive. Mais dans les deux cas la cale viscoélastique peut être une cale viscoélastique à raideur variable constituée par exemple d'une cale viscoplastique hydrodynamique à fluide magnétorhéologique. Dans ce cas le dispositif de commande génère en outre un signal de commande de la raideur de la cale viscoélastique à raideur variable. Avec un tel dispositif il est possible de piloter non seulement pulsation de la contre vibration principale générée par le moyen de génération de contre vibrations 5, mais également l'amplitude de la vibration qui est transmise à la structure 1, et enfin de superposer à cette contre vibration principale une contre vibration secondaire de faible amplitude générée par le batteur dynamique de faible puissance 45, cette contre vibration complémentaire étant une contre vibration à large bande.

Dans les modes de réalisations qui viennent d'être décrits, le moyen de génération d'une contre vibration est un moyen de contre vibrations constitué de deux rotors à balourds. Mais l'homme du métier comprendra que ce moyen de génération d'une contre vibration peut être un moyen de génération d'une contre vibration de tout type.

Lorsqu'un tel dispositif anti-vibratoire est monté sur un véhicule automobile pour atténuer les vibrations transmises à la caisse par le groupe moteur, le dispositif anti-vibratoire peut être disposé en tout point de la caisse mais de préférence sur un point correspondant à un ventre de vibrations. Lorsqu'un tel dispositif est commandé par un moyen de pilotage en boucle fermée, le capteur d'amplitude de vibration disposé sur la structure peut être disposé en tout point de la caisse. Mais il est préférable de le placer à proximité du siège du conducteur, ou tout du moins à proximité de l'habitacle destiné à recevoir les passagers, et de préférence en un point correspondant à un ventre de vibrations de la caisse.

## Revendications

1. Dispositif anti-vibratoire (4, 24, 34, 44) du type comprenant un moyen de génération (5) d'une contre vibration et un moyen de pilotage (10, 20, 27, 47) **caractérisé en ce qu'**il comprend en outre un moyen de couplage (6, 26, 36, 46) du type cale visco-élastique coopérant avec le moyen de génération d'une contre vibration (5) pour amplifier la contre vibration engendrée par le moyen de génération d'une contre vibration.

2. Dispositif anti-vibratoire (4, 24, 34, 44) selon la revendication 1, **caractérisé en ce que** le moyen de couplage (6, 36, 46) est une cale viscoélastique dont la rigidité est choisie de telle sorte que la fréquence de résonance du dispositif anti-vibratoire (4) est inférieure à la fréquence de la contre vibration.

3. Dispositif anti-vibratoire (4, 24, 34, 44) selon la revendication 2, **caractérisé en ce que** la fréquence de résonance du dispositif anti-vibratoire est voisine de la fréquence de contre vibration.

4. Dispositif anti-vibratoire selon la revendication 2 ou la revendication 3, **caractérisé en ce que** la cale viscoélastique est une cale (26) dont la rigidité est réglable.

5. Dispositif anti-vibratoire selon la revendication 4, **caractérisé en ce que** le cale (26) dont la rigidité est réglable est une cale hydraulique à fluide magnétorhéologique.

6. Dispositif anti-vibratoire (4, 24, 34, 44) selon l'une quelconque des revendications 1 à 5, **caractérisé en ce que** le moyen de génération d'une contre vibration (5) est constitué de deux rotors (7, 7') munis de balourds (8, 8'), couplés mécaniquement de façon à tourner en sens inverse l'un de l'autre à la même vitesse, et d'un moteur d'entraînement.

7. Dispositif anti-vibratoire (34, 44) selon la revendication 6, **caractérisé en ce qu'**il comprend en outre un batteur de faible puissance (35, 45).

8. Dispositif anti-vibratoire selon l'une quelconques des revendications 1 à 7, **caractérisé en ce que** le moyen de pilotage (10, 47) est un filtre qui reçoit depuis un capteur (11, 48) un signal de fréquence et depuis un capteur (12, 49) un signal de phase d'une vibration, et depuis un capteur (13, 50) un signal de phase d'une contre-vibration, et qui génère au moins un signal de commande du moyen (5) de génération d'une contre-vibration.

9. Dispositif anti-vibratoire selon la revendication 8, **caractérisé en ce que** le filtre est de type à cartographie.

10. Dispositif anti-vibratoire selon l'une quelconque des revendications 1 à 7, **caractérisé en ce que** le moyen de pilotage (20, 27, 37) est un filtre qui reçoit depuis un capteur (21, 28, 38) un signal de fréquence d'une vibration et depuis un capteur (22, 29, 39) un signal d'amplitude d'une vibration et qui génère au moins un signal de commande du moyen (5) de génération d'une contre vibration.

11. Dispositif anti-vibratoire selon la revendication 10, **caractérisé en ce que** le filtre utilise une loi de commande du type moindre carrés.

12. Dispositif anti-vibratoire selon la revendication 4, **caractérisé en ce que** le moyen de pilotage (27) génère un signal de commande de la rigidité de la cale viscoélastique (26) dont la rigidité est réglable.

13. Dispositif anti-vibratoire selon la revendication 7, **caractérisé en ce que** le moyen de pilotage (37, 47) génère un signal de commande du batteur de faible puissance (35, 45).

14. Dispositif anti-vibratoire selon la revendication 13, **caractérisé en ce que** le signal de commande du batteur de faible puissance (37, 47) est un signal large bande.

15. Véhicule automobile **caractérisé en ce qu'**il comporte au moins un dispositif anti-vibratoire selon l'une quelconque des revendications 1 à 14 destiné à atténuer les vibrations transmises à la caisse par le bloc-moteur.

16. Véhicule automobile selon la revendication 15 **caractérisé en ce que** le dispositif anti-vibratoire émet une contre-vibration de fréquence égale à une harmonique de la vibration engendrée par le groupe moto propulseur lorsqu'il tourne au ralenti.

17. Véhicule automobile selon la revendication 16 **caractérisé en ce que** le groupe moto propulseur est du type 4 cylindres 4 temps, et la fréquence de la contre-vibration est égale à la deuxième harmonique de la vibration engendrée par le groupe motopropulseur lorsqu'il tourne au ralenti.

## Claims

1. Anti-vibration device (4, 24, 34, 44) of the type comprising means (5) for generating a counter-vibration and control means (10, 20, 27, 47), **characterised in that** it further comprises coupling means (6, 26, 36, 46) of the viscoelastic block type, co-operating with the means (5) for generating a counter-vibration, in order to amplify the counter-vibration generated by the means for generating a counter-vibration.

2. Anti-vibration device (4, 24, 34, 44) according to claim 1, **characterised in that** the coupling means (6, 36, 46) is a viscoelastic block the rigidity of which is selected such that the resonating frequency of the anti-vibration device (4) is below the frequency of the counter-vibration.

3. Anti-vibration device (4, 24, 34, 44) according to claim 2, **characterised in that** the resonating frequency of the anti-vibration device is close to the counter-vibration frequency.

4. Anti-vibration device according to claim 2 or 3, **characterised in that** the viscoelastic block is a block (26) the rigidity of which is adjustable.

5. Anti-vibration device according to claim 4, **characterised in that** the block (26) the rigidity of which is adjustable is a hydraulic block with magnetorheological fluid.

6. Anti-vibration device (4, 24, 34, 44) according to any one of claims 1 to 5, **characterised in that** the means (5) for generating a counter-vibration consist of two rotors (7, 7') provided with unbalances (8, 8'), mechanically coupled so as to rotate in opposite directions to one another at the same speed, and a drive motor.

7. Anti-vibration device (34, 44) according to claim 6, **characterised in that** it further comprises a low-power beater (35, 45).

8. Anti-vibration device according to any one of claims 1 to 7, **characterised in that** the control means (10, 47) consist of a filter which receives a frequency signal from a sensor (11, 48), and a phase signal of a vibration from a sensor (12, 49), and a phase signal of a counter-vibration from a sensor (13, 50), and which generates at least one control signal for the counter-vibration generating means (5).

9. Anti-vibration device according to claim 8, **characterised in that** the filter is of the map type.

10. Anti-vibration device according to any one of claims 1 to 7, **characterised in that** the control means (20, 27, 37) consist of a filter which receives a frequency signal of a vibration from a sensor (21, 28, 38), and an amplitude signal of a vibration from a sensor (22, 29, 39), and which generates at least one control signal for the counter-vibration generating means (5).

11. Anti-vibration device according to claim 10, **characterised in that** the filter uses a command law of the least squares type.

12. Anti-vibration device according to claim 4, **characterised in that** the control means (27) generate a signal for controlling the rigidity of the viscoelastic block (26), the rigidity of which is adjustable.

13. Anti-vibration device according to claim 7, **characterised in that** the control means (27) generate a signal for controlling the low-power beater (35, 45).

14. Anti-vibration device according to claim 13, **characterised in that** the control signal for the low-power beater (37, 47) is a broadband signal.

15. Automotive vehicle, **characterised in that** it comprises at least one anti-vibration device according to any one of claims 1 to 14, adapted to attenuate the vibrations transmitted to the vehicle body by the engine block.

16. Automotive vehicle according to claim 15, **characterised in that** the anti-vibration device emits a counter-vibration the frequency of which is equal to a harmonic of the vibration produced by the power unit when it is idling.

17. Automotive vehicle according to claim 16, **characterised in that** the power unit is of the 4-cylinder 4-stroke type, and the frequency of the counter-vibration is equal to the second harmonic of the vibration produced by the power unit when it is idling,

## Patentansprüche

1. Schwingungsdämpfungsvorrichtung (4, 24, 34, 44) mit einer Einrichtung (5) zum Erzeugen einer Gegenschwingung und einer Steuereinrichtung (10, 20, 27, 47), **dadurch gekennzeichnet, dass** sie weiterhin eine Kupplungseinrichtung (6, 26, 36, 46) vom Typ einer viskoelastischen Scheibe umfasst, die mit der Einrichtung (5) zum Erzeugen einer Gegenschwingung zusammenarbeitet, um die von der Einrichtung zum Erzeugen einer Gegenschwingung erzeugte Gegenschwingung zu verstärken.

2. Schwingungsdämpfungsvorrichtung (4, 24, 34, 44) nach Anspruch 1, **dadurch gekennzeichnet, dass** die Kupplungseinrichtung (6, 36, 46) eine viskoelastische Scheibe ist, deren Festigkeit so gewählt ist, dass die Resonanzfrequenz der Schwingungsdämpfungsvorrichtung (4) unter der Frequenz der Gegenschwingung liegt.

3. Schwingungsdämpfungsvorrichtung (4, 24, 34, 44) nach Anspruch 2, **dadurch gekennzeichnet, dass** die Resonanzfrequenz der Schwingungsdämpfungsvorrichtung in der Nähe der Frequenz der Gegenschwingung liegt.

4. Schwingungsdämpfungsvorrichtung nach Anspruch 2 oder Anspruch 3, **dadurch gekennzeichnet, dass** die viskoelastische Scheibe eine Scheibe (26) ist, deren Festigkeit einstellbar ist.

5. Schwingungsdämpfungsvorrichtung nach Anspruch 4, **dadurch gekennzeichnet, dass** die Scheibe (26), deren Festigkeit einstellbar ist, eine hydraulische Scheibe aus einem magnetorheologischen Fluid ist.

6. Schwingungsdämpfungsvorrichtung (4, 24, 34, 44) nach einem der Ansprüche 1 bis 5, **dadurch gekennzeichnet, dass** die Einrichtung (5) zum Erzeugen einer Gegenschwingung aus zwei Rotoren (7, 7'), die mit Unwuchten (8, 8') versehen sind und mechanisch so miteinander verbunden sind, dass sie sich in einer zueinander umgekehrten Richtung mit derselben Geschwindigkeit drehen, und einem Antriebsmotor besteht.

7. Schwingungsdämpfungsvorrichtung (34, 44) nach Anspruch 6, **dadurch gekennzeichnet, dass** sie weiterhin einen Klopfer (35, 45) mit geringer Leistung umfasst.

8. Schwingungsdämpfungsvorrichtung nach einem der Ansprüche 1 bis 7, **dadurch gekennzeichnet, dass** die Steuereinrichtung (10, 47) ein Filter ist, das von einem Messfühler (11, 48) ein Schwingungsfrequenzsignal und von einem Messfühler (12, 49) ein Schwingungsphasensignal sowie von einem Messfühler (13, 50) ein Signal der Phase einer Gegenschwingung empfängt und das wenigstens ein Steuersignal für die Einrichtung (5) zum Erzeugen einer Gegenschwingung erzeugt.

9. Schwingungsdämpfungsvorrichtung nach Anspruch 8, **dadurch gekennzeichnet, dass** das Filter vom Typ einer Kartographie ist.

10. Schwingungsdämpfungsvorrichtung nach einem der Ansprüche 1 bis 7, **dadurch gekennzeichnet, dass** die Steuereinrichtung (20, 27, 37) ein Filter ist, das von einem Messfühler (21, 28, 38) ein Schwingungsfrequenzsignal und von einem Messfühler (22, 29, 39) ein Schwingungsamplitudensignal empfängt und wenigstens ein Signal zum Steuern der Einrichtung (5) zum Erzeugen einer Gegenschwingung erzeugt.

11. Schwingungsdämpfungsvorrichtung nach Anspruch 10, **dadurch gekennzeichnet, dass** das Filter eine Steuergesetzmäßigkeit vom Typ der kleinsten Fehlerquadrate verwendet.

12. Schwingungsdämpfungsvorrichtung nach Anspruch 4, **dadurch gekennzeichnet, dass** die Steuereinrichtung (27) ein Signal zum Steuern der Festigkeit der viskoelastischen Scheibe (26) erzeugt, deren Festigkeit einstellbar ist.

13. Schwingungsdämpfungsvorrichtung nach Anspruch 7, **dadurch gekennzeichnet, dass** die Steuereinrichtung (37, 47) ein Signal zum Steuern des Klopfers (35, 45) mit geringer Leistung erzeugt.

14. Schwingungsdämpfungsvorrichtung nach Anspruch 13, **dadurch gekennzeichnet, dass** das Signal zum Steuern des Klopfers (37, 47) mit geringer Leistung ein Breitbandsignal ist.

15. Kraftfahrzeug **dadurch gekennzeichnet, dass** es wenigstens eine Schwingungsdämpfungsvorrichtung nach einem der Ansprüche 1 bis 14 umfasst, die dazu bestimmt ist, die Schwingungen zu dämpfen, die vom Motorblock auf die Karosserie übertragen werden.

16. Kraftfahrzeug nach Anspruch 15, **dadurch gekennzeichnet, dass** die Schwingungsdämpfungsvorrichtung eine Gegenschwingung mit einer Frequenz gleich einer Harmonischen der Schwingung abgibt, die von der Motorgetriebegruppe erzeugt wird, wenn sich diese im Leerlauf dreht.

17. Kraftfahrzeug nach Anspruch 16, **dadurch gekennzeichnet, dass** die Motorgetriebegruppe von 4-Zylinder-4-Takt-Typ ist und die Frequenz der Gegenschwingung gleich der zweiten Harmonischen der Schwingung ist, die von der Motorgetriebegruppe im Leerlauf erzeugt wird.
